# EUROPÄISCHE PATENTSCHRIFT

(11) **EP 0 987 458 B1**
(45) Veröffentlichungstag und Bekanntmachung des Hinweises auf die Patenterteilung: **28.11.2001**
(21) Anmeldenummer: 99113220.0
(22) Anmeldetag: 08.07.1999
(51) Int. Cl.: F16D 3/205, F16D 1/10

(54) **Drehstarre Ausgleichskupplung**
Torsionally rigid compensation coupling
Accouplement de compensation rigide en torsion

(30) Priorität: 19.09.1998 DE 19843064
(43) Veröffentlichungstag der Anmeldung: 22.03.2000
(73) Patentinhaber: Preh-Werke GmbH & Co. KG, 97616 Bad Neustadt a.d. Saale (DE)
(72) Erfinder: Ofenhitzer, Thomas, 97616 Salz (DE); Zegula, Oliver, 97616 Bad Neustadt (DE)
(74) Vertreter: Dietrich, Barbara

(56) Entgegenhaltungen:
- DE-A- 2 048 324
- FR-A- 2 727 483
- GB-A- 427 935
- EUGENE CLOUTIER: "QUICK DISCONNECT COUPLING" XEROX DISCLOSURE JOURNAL, Bd. 11, Nr. 2, März 1986 (1986-03) - April 1986 (1986-04), Seite 103 XP002123794

## Beschreibung

Die Erfindung betrifft eine drehstarre Ausgleichskupplung zwischen zwei Wellenenden nach dem Oberbegriff des Anspruchs 1.

Eine derartige drehstarre Ausgleichskupplung ist beispielsweise aus DE-A-2 048 324 oder Dubbel, Fachbuch für den Maschinenbau, 15. Auflage, Seite 409, Bild 4d bekannt. Diese eignet sich nicht für eine Montage des Kugel-Kugelpfannenelements selbst zur Kupplung von Wellenenden, die jeweils an weiteren Elementen, zum Beispiel einerseits an einem Bedienteil und andererseits an einem Antriebsmotor angeordnet sind.

Es ist daher Aufgabe der Erfindung, eine für eine leichte Montage geeignete drehstarre Ausgleichskupplung aufzufinden, insbesondere soll das Zusammenführen der Kupplungselemente erleichtert werden.

Diese Aufgabe ist durch die im Kennzeichen des Anspruches 1 angegebenen Merkmale gelöst. Vorteilhafte Weiterbildungen sind mit den Unteransprüchen angegeben.

Ein Ausführungsbeispiel der Erfindung ist in der Zeichnung dargestellt und wird nachfolgend beschrieben.

Die Zeichnung zeigt:
- Fig. 1: einen Längsschnitt einer drehstarren Ausgleichskupplung 1 in neutraler Wirklage der Kupplungselemente und der Wellenenden,
- Fig. 2: die Ausgleichskupplung nach Fig. in Ausgleichsstellung,
- Fig. 3: einen Längsschnitt der Ausgleichskupplung nach Fig. 1 in Montagestellung des Mitnehmerstiftes,
- Fig. 4: einen Querschnitt durch den Mitnehmerstift der Fig. 1.

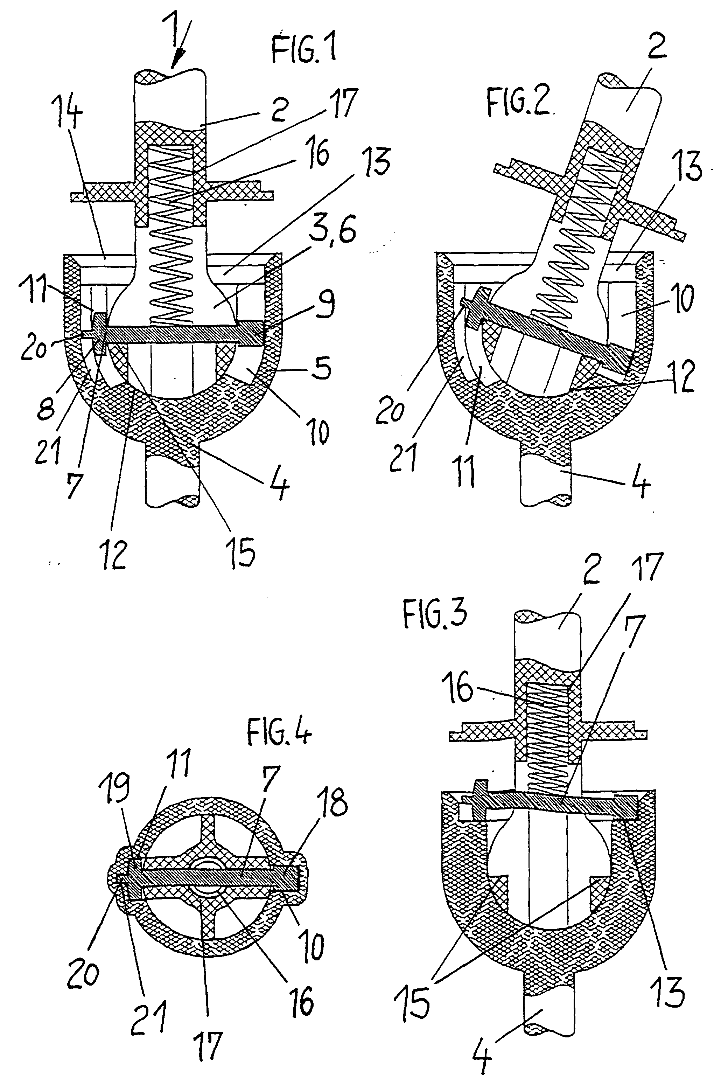

Fig. 1 und 2 zeigen einen Längsschnitt einer drehstarren Ausgleichskupplung 1 in neutraler Wirklage bzw. in Ausgleichsstellung der Kupplungselemente und der Wellenenden, wie sie insbesondere in Fahrzeugen zum Einsatz kommen soll, mit einem an einem Wellenende 2 angeordneten Kugelelement 3 und einem an dem anderen Wellenende 4 angeordneten Pfannenelement 5 und einem eine Kugel 6 des Kugelelements 3 durchragenden Mitnehmerstift 7, der mit seinen aus dem Kugelelement 3 herausragenden Enden 8, 9 in Nuten 10, 11 des Pfannenelements 5 hineinragt.

Es ist nun vorgesehen, dass die Nuten 10, 11 und eine Kugelpfanne 12 des Pfannenelements 5 in Längsrichtung des Wellenendes 4 in eine zylindrische Ausnehmung 13 einmünden, die eine Einführanfasung 14 aufweist, die das Zusammenfügen erleichtert, und dass der Mitnehmerstift 7 unter Federkraft gegen den Mitnehmerstift 7 in seiner Wirklage fixierende Anschläge 15 anliegt und gegen die Federkraft in Längsrichtung des Wellenendes 4 verschieblich ist.

Diese Massnahme ermöglicht bereits den Zusammenbau des Kugel-Pfannenelements, ohne dass der Mitnehmerstift 7 in die vorgesehenen Nuten 10, 11 eingerastet ist. Das Einrasten erfolgt dann durch Drehen eines der Wellenenden 2 oder 4, ohne die weiteren unten beschriebenen Massnahmen nach spätestens einer halben Drehung.

Es ist ersichtlich, dass eine die Federkraft bewirkende Feder 16 in einer zylindrischen Ausnehmung 17 des das Kugelelement 3 tragenden Wellenendes 2 angeordnet ist. Diese Ausnehmung 17 ist zentrisch zum Wellenende 2 angeordnet und mündet zentrisch zum Wellenende 2 aus dem Kugelelement 3 bzw. der Kugel 6 aus. Der Mitnehmerstift 7 weist an seinen aus dem Kugelelement 3 bzw. der Kugel 6 herausragenden Enden 8, 9 bundbildende Ansätze 18, 19 zu seiner axialen Fixierung an der Kugel 6 bzw. dem Kugelelement 3 auf, wobei die bundbildenden Ansätze 18, 19 ungleich gross ausgeführt und in die entsprechend gross ausgeführten Nuten 10, 11 des Pfannenelements 5 hineinragen. Der grössere Ansatz 19 weist gegenüber dem kleineren Ansatz 18 eine geringere Axiallänge und einen kleinen Ansatzzapfen 20 auf, der in eine von der grösseren Nut 11 ausgehenden und in die zylindrische Ausnehmung 13 einmündende Zusatznut 21 hineinragt.

Diese Massnahme stellt eine vorbestimmte Zuordnung der Wellenenden 2, 4 nach spätestens einer vollen Drehung sicher.

Durch die erfindungsgemässe Ausführung der Ausgleichskupplung ist es möglich geworden, das Kuppeln der Wellenenden 2, 4 zum Beispiel direkt in einem Fahrzeug auszuführen, wobei beim Zusammenstecken des Kugel-Pfannenelements der Mitnehmerstift 7, wie in Fig. 3 dargestellt ist, von den die Wirklage fixierenden Anschlägen 15 abhebt und unter Vorspannung der Feder 16 an der Axialwand der Ausnehmung 13 anliegt und bei Drehung eines Wellenendes 2 oder 4 in die entsprechenden Nuten 10, 11, 21 einrastet, das heisst die Ansätze 18, 19, 20 des Mitnehmerstifts 7 umwandern die Ausnehmung 13, bis sie mit den entsprechenden Nuten 10, 11, 21 in Überdeckung gelangen und unter der Kraftwirkung der Feder 16 mit dem Mitnehmerstift 7 bis zu den Anschlägen 15 gedrückt werden. Der kleine Ansatzzapfen 20 am grössten Ansatz 19 stellt sicher, dass der kleinere Ansatz 18 nicht in die grösste Nut 11 einrastet, womit die genaue Zuordnung der Wellenenden 2, 4 gegeben ist.

Fig. 4 zeigt einen Querschnitt durch den Mitnehmerstift, aus dem die Ausnehmung 13 für die Feder 16, der Mitnehmerstift 7 mit den Ansätzen 18, 19 und dem Ansatzzapfen 20, die Nuten 10, 11, 21 und die die Kugelpfanne 12 bildende Ausnehmung ersichtich sind.

## Patentansprüche

1. Drehstarre Ausgleichskupplung (1) zwischen zwei Wellenenden, insbesondere für Bedienelemente in Fahrzeugen, mit einem an einem Wellenende (2) angeordneten Kugelelement (3) und einem an dem anderen Wellenende angeordneten Pfannenelement und einem die Kugel (6) des Kugelelements (3) durchragenden Mitnehmerstift (7), der mit seinen aus dem Kugelelement herausragenden Enden in Nuten (10, 11, 21) des Pfannenelements (5) hineinragt, **dadurch gekennzeichnet, dass** die Nuten (10, 11, 21) und die Kugelpfanne (12) des Pfannenelements (5) in Längsrichtung des Wellenendes (4) in eine zylindrische Ausnehmung (13) einmünden, die eine Einführanfasung (14) aufweist, und dass der Mitnehmerstift (7) unter Federkraft gegen den Mitnehmerstift (7) in seiner Wirklage fixierende Anschläge (15) anliegt und gegen die Federkraft in Längsrichtung des Wellenendes (4) verschieblich ist.

2. Ausgleichskupplung nach Anspruch 1, **dadurch gekennzeichnet, dass** eine die Federkraft bewirkende Feder (16) in einer zylindrischen Ausnehmung (17) des das Kugelelement (3) tragenden Wellenendes (2) angeordnet ist, die zentrisch zum Wellenende (2) angeordnet ist und zentrisch zum Wellenende (2) aus dem Kugelelement (3) bzw. der Kugel (6) ausmündet.

3. Ausgleichskupplung nach Anspruch 2, **dadurch gekennzeichnet, dass** der Mitnehmerstift (7) an seinen aus dem Kugelelement (3) bzw. der Kugel (6) herausragenden Enden (8,9) bundbildende Ansätze (18, 19) zu seiner axialen Fixierung an der Kugel (6) bzw. dem Kugelelement (3) aufweist.

4. Ausgleichskupplung nach Anspruch 3, **dadurch gekennzeichnet, dass** die bundbildenden Ansätze (18, 19) ungleich gross ausgeführt und in die entsprechend gross ausgeführten Nuten (10, 11) des Pfannenelements (5) hineinragen, wobei der grössere Ansatz (19), gegenüber dem kleineren Ansatz (18) eine geringere Axiallänge und einen kleinen Ansatzzapfen (20) aufweist, der in eine von der grösseren Nut (11) ausgehenden und in die zylindrische Ausnehmung (13) einmündende Zusatznut (21) hineinragt.

## Claims

1. Torsionally rigid compensation coupling (1) between two shaft ends, in particular for operating elements in vehicles, having a ball element (3) that is arranged at one shaft end (2) and a socket element that is arranged at the other shaft end and a carrier pin (7) that projects through the ball (6) of the ball element (3) and, with its ends that project out of the ball element, projects into grooves (10, 11, 21) of the socket element (5), **characterized in that** the grooves (10, 11, 21) and the ball socket (12) of the socket element (5), in the longitudinal direction of the shaft end (4), run into a cylindrical recess (13) that has an entering chamfer (14), and **in that** the carrier pin (7) rests under spring force against stops (15) fixing the carrier pin (7) in its operating position and is displaceable in the longitudinal direction of the shaft end (4) in opposition to the spring force.

2. Compensation coupling according to claim 1, **characterized in that** a spring (16) that gives rise to the spring force is arranged in a cylindrical recess (17) of the shaft end (2) that bears the ball element (3), the recess (17) being arranged centrally in relation to the shaft end (2) and opening centrally to the shaft end (2) out of the ball element (3) or the ball (6) respectively.

3. Compensation coupling according to claim 2, **characterized in that** the carrier pin (7) has, at its ends (8, 9) which project out of the ball element (3) or the ball (6) respectively, collar-forming projections (18, 19) for the axial fixation thereof on the ball (6) or the ball element (3) respectively.

4. Compensation coupling according to claim 3, **characterized in that** the collar-forming projections (18, 19) are of unequal sizes and project into the appropriately sized grooves (10, 11) of the socket element (5), with the larger projection (19) having, in comparison with the smaller projection (18), a shorter axial length and a small projection peg (20) which projects into an additional groove (21) that originates from the larger groove (11) and runs into the cylindrical recess (13).

## Revendications

1. Accouplement compensateur rigide en torsion (1) entre deux extrémités d'arbre d'entraînement, notamment pour les éléments de commande dans les véhicules, avec rotule (3) située à une extrémité d'arbre d'entraînement (2) et un logement situé à une autre extrémité d'arbre d'entraînement et une broche d'entraînement (7) traversant la sphère (6) de la rotule (3), laquelle s'enclenche avec ses extrémités dépassant de la rotule dans les rainures (10, 11, 21) du logement (5), **caractérisé en ce que** les rainures (10, 11, 21) et le coussinet (12) du logement (5) débouche dans l'axe longitudinal de l'extrémité d'arbre d'entraînement (4) dans une cavité cylindrique (13), qui présente un biseau d'introduction (14), et que la broche d'entraînement (7) repose sous l'effet de ressort que la broche d'entraînement (7) subit sur les butées de fixation (15) dans sa position d'action et qui se déplace en position inverse du ressort dans l'axe longitudinal de l'extrémité d'arbre d'entraînement (4).

2. Accouplement compensateur selon la revendication 1, **caractérisé en ce qu'**un ressort provoquant un effet de ressort (16) est situé dans une cavité cylindrique (17) de l'extrémité d'arbre d'entraînement (2) supportant la rotule (3), ladite cavité étant située au centre de l'extrémité d'arbre d'entraînement (2) et aboutissant au centre de l'extrémité d'arbre d'entraînement (2) sur la rotule (3) et respectivement la sphère (6).

3. Accouplement compensateur selon la revendication 2, **caractérisé en ce que** la broche d'entraînement (7) présente à ses extrémités (8, 9) dépassant de la rotule (3) et respectivement de la sphère (6) des épaulements (18, 19) pour sa fixation axiale sur la sphère (6) ou la rotule (3).

4. Accouplement compensateur selon la revendication 3, **caractérisé en ce que** les épaulements formant un collet de butée (18, 19) sont de tailles différentes et s'enclenchent dans les rainures de tailles correspondantes (10, 11) du logement (5), l'épaulement de plus grande taille (19) présentant par rapport à l'épaulement le plus petit (18) une longueur axiale inférieure et un petit pivot d'épaulement (20), qui rentre dans une rainure complémentaire (21) partant de la rainure la plus grosse (11) et débouchant dans la cavité cylindrique (13).
